# DEMANDE DE BREVET EUROPEEN

(11) **EP 2 382 860 A1**
(43) Date de publication de la demande: **02.11.2011**
(21) Numéro de dépôt: 11305512.3
(22) Date de dépôt: 29.04.2011
(51) Int. Cl.: A01G 3/04, A01G 17/02

(54) **Prétailleuse**

(30) Priorité: 30.04.2010 FR 1053353
(71) Demandeur: LAGARDE S.A.S, 33450 SAINT LOUBES (FR)
(72) Inventeur: Texier, Mathieu, 33700 Merignac (FR)
(74) Mandataire: Fantin, Laurent

(57) **Abrégé**

L'objet de l'invention est une prétailleuse comprenant deux têtes (12,14) susceptibles d'être disposées de part et d'autre d'un rang d'une culture, une première tête (12) comportant au moins un disque (22) avec en périphérie au moins une portion affutée appelé lame, caractérisée en ce qu'elle comprend au niveau de la seconde tête (14) au moins un couple de deux disques (24,24') avec des chants non affûtés, appelés contre-lames, une lame (22) d'une première tête (12) étant disposée dans un plan parallèle et intercalé entre les deux plans définis par les contre-lames (24,24') d'un même couple portées par la seconde tête (14), ladite lame (22) et lesdites contre-lames (24,24') formant un ensemble de coupe.

## Description

La présente invention se rapporte à une prétailleuse.

Une prétailleuse est généralement montée sur un engin motorisé tel qu'un tracteur ou un enjambeur par exemple, et permet de tailler les rameaux ou les branches des vignes, des arbustes ou de toutes autres cultures palissées.

Elle comprend généralement un châssis auquel sont reliées deux têtes disposées de part et d'autre du rang de vigne. Les têtes comprennent des ensembles de coupe empilés le long d'un axe sensiblement vertical, lesdites têtes étant montées sur des bras permettant de les maintenir plaquées contre le rang ou éventuellement de les écarter.

Selon un premier mode de réalisation illustré notamment par les documents FR-2.635.251, EP-696.418, EP-2.095.704, chaque ensemble de coupe comprend au niveau de la même tête d'une part une lame circulaire (ou disque) s'étendant dans un plan sensiblement perpendiculaire à l'axe, avec des dents au niveau de sa périphérie, et d'autre part, des cages dans chacune desquelles est logée une lame, lesdites cages assurant la fonction de contre-lame et ayant à cet effet au niveau de leur périphérie des échancrures susceptibles de dégager une partie de la lame. Selon ce mode de réalisation, la coupe découle du mouvement de rotation relatif entre la lame et la cage. Avantageusement, ce type de prétailleuse comprend d'un côté du rang une tête dite de coupe avec un empilage de cages dans chacune desquelles sont disposées des lames, la coupe découlant du mouvement relatif entre les lames et les contre-lames formées par les cages, et de l'autre côté du rang, un empilage de disques dont la fonction est de pousser la végétation contre la tête de coupe mais qui n'assurent pas la fonction de contre-lames.

Ces dispositifs ne sont pas pleinement satisfaisants car ils procurent une qualité de coupe médiocre en raison de la présence d'un jeu entre les lames et les contre-lames, ledit jeu étant nécessaire au montage.

De plus, ils ont un coût relativement élevé en raison notamment du mode de réalisation par mécano-soudage des cages.

Selon un autre mode de réalisation, chaque ensemble de coupe comprend une lame sous forme d'un disque s'étendant dans un plan sensiblement perpendiculaire à l'axe, avec des dents au niveau de sa périphérie.

Ainsi, chaque tête comprend une pluralité de disques empilés et espacés entre eux, les disques d'une première tête étant décalés en hauteur par rapport aux disques de l'autre tête de manière à ne pas interférer entre eux.

Selon ce mode de réalisation, la coupe de la végétation découle de la rotation de chaque disque.

Comme précédemment, ce mode de réalisation n'est pas pleinement satisfaisant en raison d'une qualité de coupe médiocre.

Pour améliorer la coupe, il est possible de limiter l'écartement en hauteur entre les disques de la première tête et les disques de la seconde tête. Toutefois, compte tenu du mode d'assemblage et d'empilement des éléments de coupe, cet écartement est toujours supérieur à 15 mm ce qui ne permet pas d'optimiser la qualité de la coupe.

De plus, ce type de dispositif tend à couper les fils de palissage contrairement au premier mode de réalisation comportant des cages qui les protègent.

Aussi, la présente invention vise à pallier les inconvénients de l'art antérieur en proposant une prétailleuse avec des ensembles de coupe permettant d'améliorer la qualité de coupe et limitant le risque de détérioration des fils de palissage.

A cet effet, l'invention a pour objet une prétailleuse comprenant deux têtes susceptibles d'être disposées de part et d'autre d'un rang d'une culture, une première tête comportant au moins un disque avec en périphérie au moins une portion affûtée appelé lame, caractérisée en ce qu'elle comprend au niveau de la seconde tête au moins un couple de deux disques avec des chants non affûtés, appelés contre-lames, une lame d'une première tête étant disposée dans un plan parallèle et intercalé entre les deux plans définis par les contre-lames d'un même couple portées par la seconde tête, ladite lame et lesdites contre-lames formant un ensemble de coupe. Avantageusement, l'écartement entre la lame et une contre-lame varie de 3 à 10 mm

D'autres caractéristiques et avantages ressortiront de la description qui va suivre de l'invention, description donnée à titre d'exemple uniquement, en regard des dessins annexés sur lesquels:
- la figure 1 est une vue en perspective d'une prétailleuse selon l'invention,
- la figure 2 est une vue de côté d'une prétailleuse selon l'invention,
- la figure 3 est une vue en perspective illustrant des ensembles de coupe selon l'invention,
- la figure 4 est une coupe verticale selon les axes de rotation des ensembles de coupe illustrés sur la figure 3,
- la figure 5 est une vue de dessus d'une prétailleuse selon l'invention,
- la figure 6 est une vue en perspective illustrant le décalage angulaire entre les disques d'une même tête,
- la figure 7 est une vue latérale illustrant la partie inférieure d'une tête,
- la figure 8 est une vue en perspective illustrant une entretoise prévue entre les lames d'une première tête,
- la figure 9 est une coupe illustrant une lame intercalée entre deux entretoises de la figure 8,
- la figure 10 est une vue en perspective illustrant une entretoise prévue entre deux couples de contre-lames, et
- la figure 11 est une coupe illustrant un couple de contre-lames disposé entre deux entretoises de la figure 10.

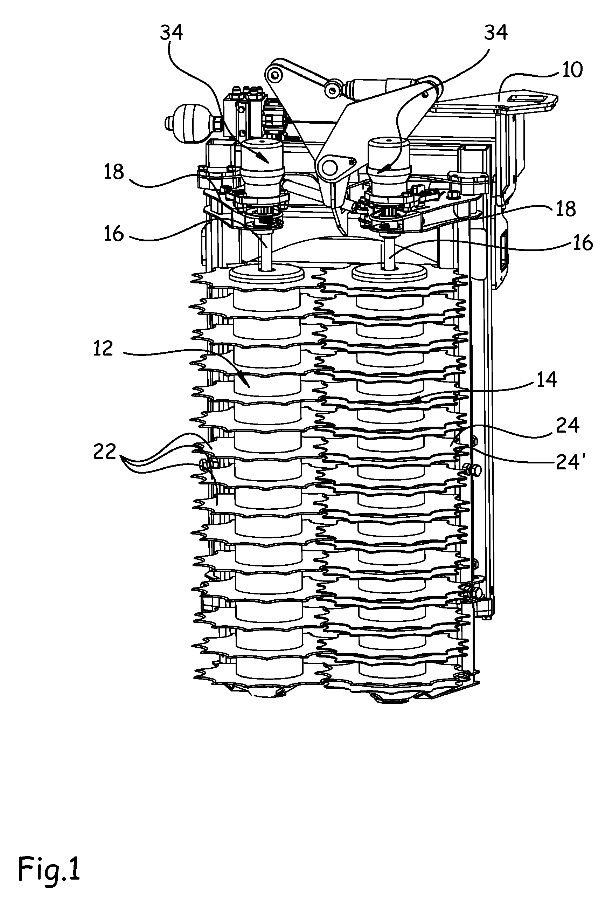

Sur la figure 1, on a représenté une prétailleuse selon l'invention permettant de tailler les rameaux ou les branches des vignes, des arbustes ou de toutes autres cultures plantées en rang comportant éventuellement des fils de palissage. Cette prétailleuse est susceptible d'être montée ou reliée à un engin motorisé se déplaçant le long d'un rang.

Cette prétailleuse comprend un bâti 10 et deux têtes 12 et 14 susceptibles d'être disposées de part et d'autre du rang et comportant chacune un arbre longitudinal 16 disposé dans un plan parallèle au rang et relié au bâti par un bras 18 autorisant au moins un mouvement de rotation tendant à rapprocher ou à écarter les arbres longitudinaux 16 du rang. La prétailleuse comprend des actionneurs pour provoquer le rapprochement ou l'écartement des têtes 12 et 14. Selon les cas, ces actionneurs peuvent être commandés manuellement ou asservis à des capteurs permettant d'automatiser le mouvement des têtes, notamment au passage des piquets utilisés pour le palissage.

Le bâti, les bras, les moyens pour provoquer le mouvement des têtes et leurs commandes ne sont pas plus décrits car ils ne constituent pas les éléments essentiels de l'invention.

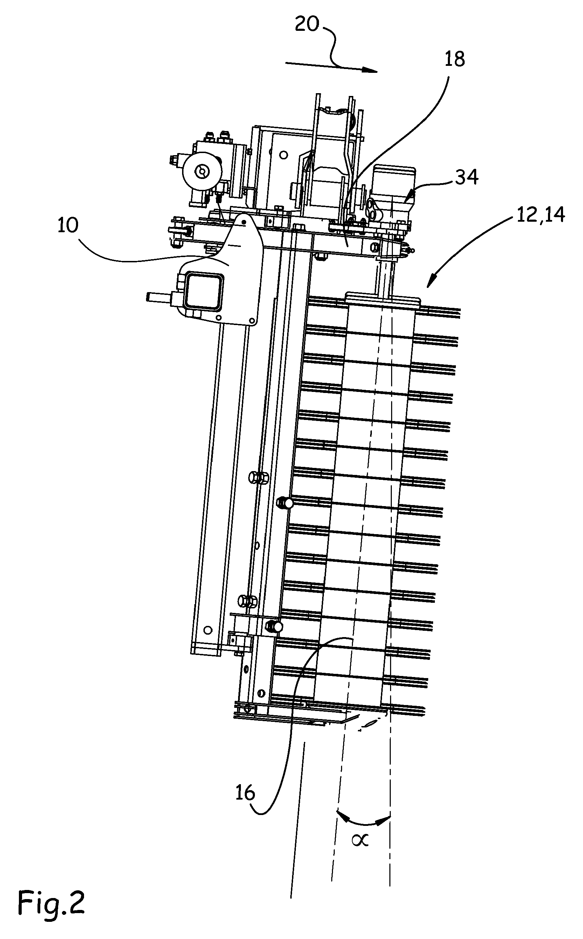

Selon une première caractéristique de l'invention, un support peut être intercalé entre les bras 18 et le bâti 10. Les bras peuvent pivoter par rapport à ce support de manière à provoquer le rapprochement ou l'écartement des têtes 12 et 14 par rapport au rang. Ce support peut pivoter selon un axe sensiblement perpendiculaire au plan vertical contenant la direction d'avance (matérialisée par la flèche 20 sur la figure 2) de manière à ce que les têtes 12 et 14 soient inclinées d'un angle a par rapport à la verticale dans un plan vertical contenant la direction d'avance. Cet agencement permet de mieux nettoyer les fils de palissage. A titre d'exemple, l'angle a est inférieur ou égal à 4°.

Selon une caractéristique de l'invention, un ensemble de coupe comprend au niveau d'une tête un disque 22 avec en périphérie au moins des portions affutées appelées par la suite lame, et au niveau de l'autre tête deux disques 24, 24' avec des chants non affutés, appelés par la suite contre-lame, la lame 22 étant disposée dans un plan parallèle et intercalé entre les deux plans des contre-lames 24, 24' .

Cet agencement permet d'obtenir une qualité de coupe satisfaisante, tout en limitant le risque d'endommagement des fils de palissage. Avantageusement, l'écartement entre la lame 22 et une contre-lame varie de 3 à 10 mm. De préférence cet écartement est de l'ordre de 5 à 7 mm.

Selon l'invention, les disques 22, 24, 24' tournent avec une vitesse de rotation comprise entre 200 et 350 tr/min.

selon les cas, tout le pourtour de la lame 22 peut être affûté ou seulement certaines portions dudit pourtour.

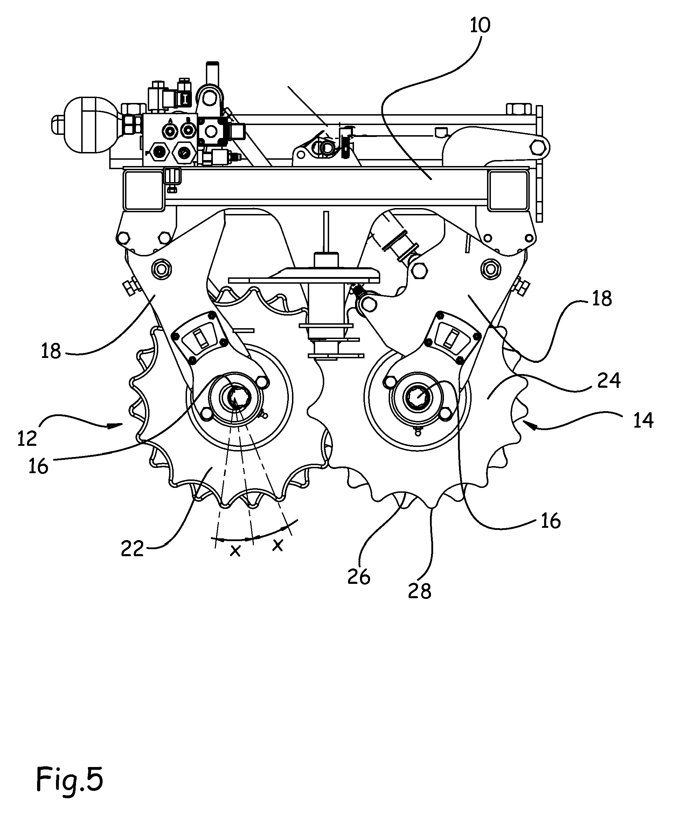

Selon un mode de réalisation, les lames et les contre-lames ont un pourtour qui comprend une succession d'échancrures 26 et de dents 28 (référencées sur la figure 5), les échancrures 26 ayant une grand rayon de courbure avec un centre disposé à l'extérieur de la lame ou de la contre-lame, les pointes des dents 28 ayant un petit rayon de courbure avec un centre disposé à intérieur de la lame ou de la contre-lame.

Pour assurer la coupe, les têtes 12 et 14 doivent être rapprochées de manière à ce que les lames et les contre-lames soient chevauchantes en vue de dessus. Selon les cas, les lames 22 peuvent être affûtées sur les deux faces ou seulement sur une face.

Par chant affûté, on entend que le chant comprend au moins une arête de coupe.

Par chant non affûté, on entend que le chant est rectiligne et de préférence perpendiculaire aux faces supérieure et inférieure des contre-lames.

Selon un mode de réalisation, les lames 22 ont une épaisseur de l'ordre de 3 à 5 mm.

Selon un mode de réalisation, les contre-lames 24, 24' ont une épaisseur de l'ordre de 3 à 5 mm.

De préférence, toutes les lames sont portées par la même tête alors que les contre-lames 24, 24' sont toutes portées par l'autre tête.

Toutefois, l'invention n'est pas limitée à cet agencement. Ainsi, une tête peut comprendre d'une part au moins une lame qui coopère avec un couple de contre-lames portées par l'autre tête, et d'autre part, au moins un couple de contre-lames qui coopèrent avec une lame portée par l'autre tête.

De préférence, toutes les lames 22 sont identiques et toutes les contre-lames 24, 24' sont identiques.

Pour limiter les risques d'endommagement des fils de palissage, comme illustré sur la figure 5, les lames 22 de la tête 12 sont disposées avec un léger décalage angulaire X les unes par rapport aux autres de manière à ce que les pointes des dents 28 des lames superposées décrivent une hélice 30.

Avantageusement, de la même manière, les contre-lames 24, 24' sont disposées avec un léger décalage angulaire régulier X les unes par rapport aux autres. L'angle de décalage X est constant sur toute la hauteur des têtes et peut varier de 25 à 35°. De préférence, l'angle de décalage X est de l'ordre de 30°.

Pour améliorer la qualité de coupe, la lame 22 est de préférence disposée à équidistance des contre-lames 24, 24' disposées de part et d'autre.

A cet effet, chaque tête 12, 14 comprend un arbre 16 longitudinal relié à chaque extrémité au bâti 10 (ou au support) dont une extrémité est entraînée en rotation par des moyens 34 de mise en rotation prévus en partie supérieure. Les moyens 34 de mise en rotation ainsi que les moyens de guidage et d'entrainement de l'arbre 16 ne sont pas décrits car ils peuvent avoir différentes configurations et sont connus de l'homme du métier.

Les lames et les contre-lames comprennent chacune un orifice central de forme cylindrique.

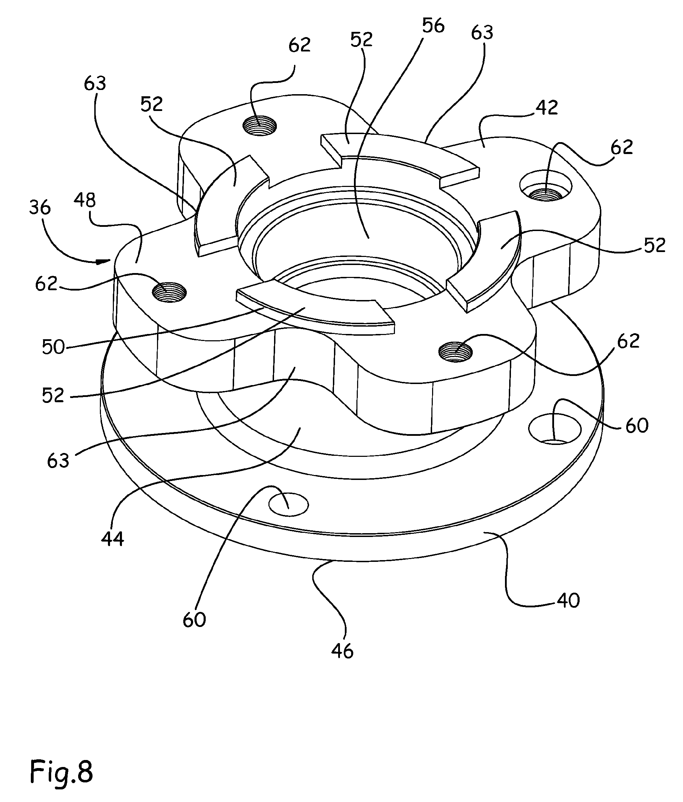

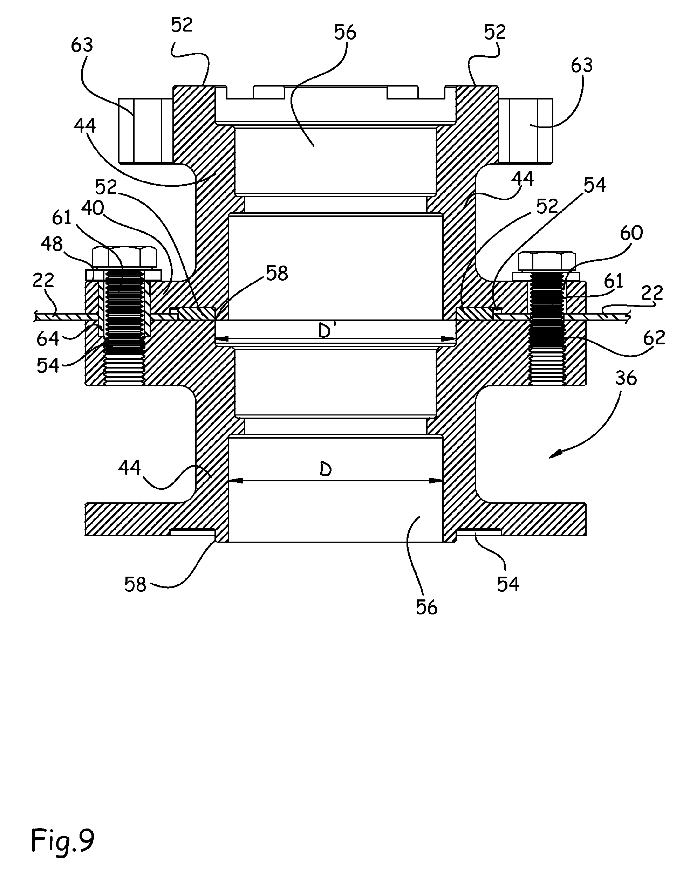

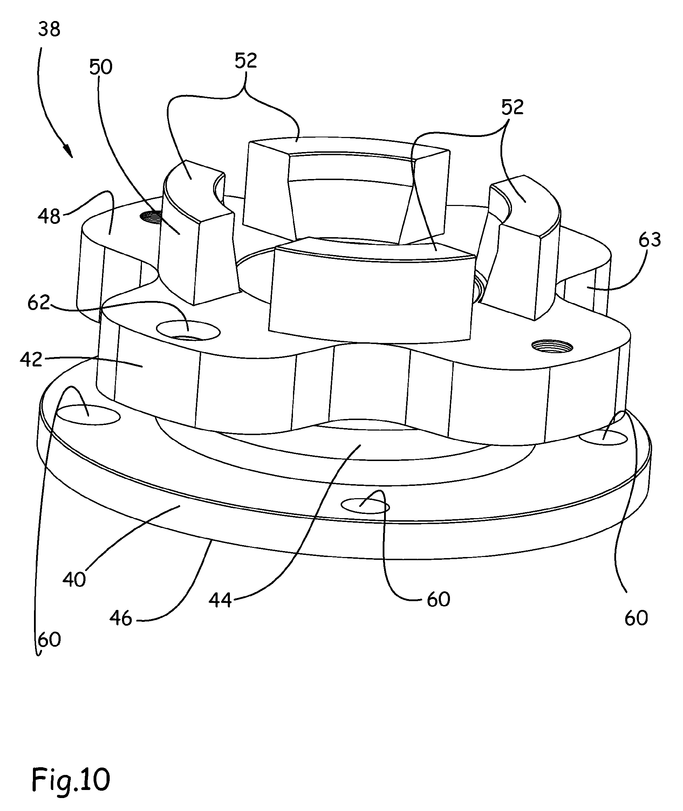

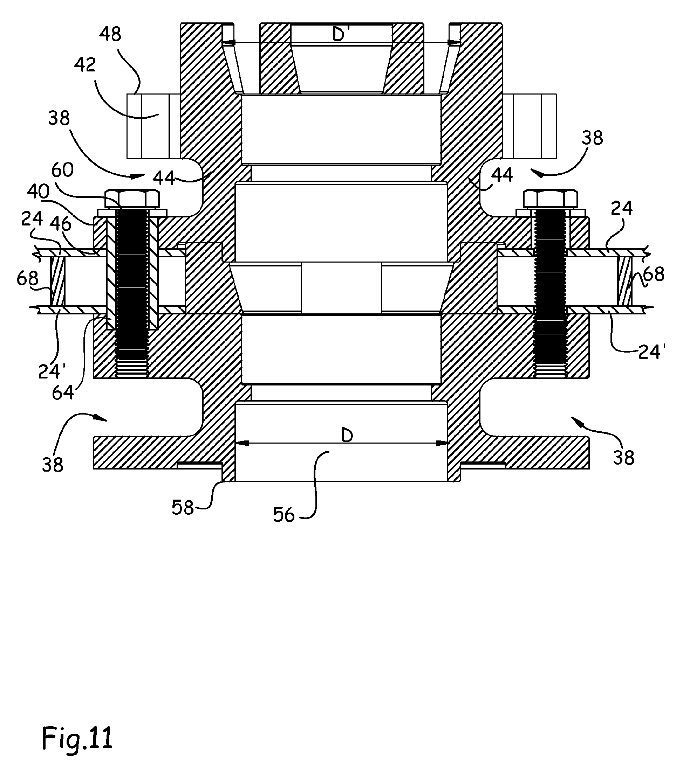

Pour limiter les coûts de fabrication et d'entretien, chaque tête comprend une entretoise simple 36 entre les lames, illustrée en détails sur les figures 8 et 9, et/ou une entretoise double 38 entre chaque couple de contre-lames, illustrée en détails sur les figures 10 et 11.

Une entretoise simple 36 comprend une première couronne 40, une seconde couronne 42 et un corps sensiblement cylindrique 44 reliant les deux couronnes 40 et 42.

La première couronne 40 disposée en partie inférieure offre au niveau de sa face opposée au corps 44, une surface d'appui 46 contre laquelle peut être plaquée une première face de la lame 22.

En parallèle, la seconde couronne 42 disposée en partie supérieure offre au niveau de sa face opposée au corps 44, une surface d'appui 48 contre laquelle peut être plaquée une seconde face de la lame 22.

Pour assurer le centrage de la lame, l'une des surfaces d'appui 46 et 48 comprend au moins une portée 50 à savoir au moins une portion cylindrique venant en saillie par rapport à ladite surface d'appui 46 ou 48 avec un diamètre identique (au jeu près) à celui de l'orifice central des lames.

Pour assurer l'entrainement des lames par l'entretoise, la lame comprend au niveau de l'orifice central au moins un ergot venant en saillie dans cet orifice. En parallèle, la portée 50 comprend plusieurs portions de cylindre 52 espacées entre lesquelles un ergot est susceptible de se loger, l'espacement entre les portions de cylindre 52 ayant des dimensions adaptées à celles de l'ergot pour obtenir un entrainement quasiment sans jeu.

Comme illustré sur la figure 8, la portée comprend quatre portions de cylindre 52 espacées de manière à définir quatre espacements pour les ergots. En fonction du couple à transmettre entre l'entretoise et la lame, cette dernière peut comprendre un ou quatre ergot(s).

Pour assurer le centrage entre deux entretoises 36, la première couronne 40 comprend au niveau de sa surface d'appui 46 une gorge 54 circulaire, le diamètre intérieur et/ou le diamètre extérieur de ladite gorge étant adapté au jeu près au diamètre correspondant des portions cylindriques 52 de la portée 50.

En parallèle, la hauteur de la portée 50 est supérieure à l'épaisseur d'une lame de manière à ce qu'une partie de ladite portée se loge dans ladite gorge 54 circulaire.

Avantageusement, l'entretoise 36 comprend un trou traversant 56 qui a un diamètre D au niveau de la surface d'appui 46 de la première couronne 40 et un diamètre D' supérieur à D au niveau de la surface d'appui 48 de la seconde couronne 42. En parallèle, la première couronne 40 comprend au niveau de sa surface d'appui 46 une collerette 58 venant en saillie par rapport à ladite surface d'appui 46 dont le diamètre extérieur est identique au jeu près au diamètre D'.

Chaque entretoise 36 comprend des moyens de liaison pour les relier entre elles. A cet effet, la première couronne 40 comprend des orifices traversant 60 dont le diamètre permet le passage d'une tige filetée d'un boulon 61 assurant la fonction de moyens de liaison.

En parallèle, la seconde couronne 42 comprend des orifices filetés 62 dont le diamètre permet le passage d'une tige filetée d'un boulon 61.

Selon l'exemple illustré, chaque couronne comprend quatre orifices 60 ou 62.

Avantageusement, les orifices 60 de la première couronne 40 sont décalés angulairement par rapport aux orifices 62 de la seconde couronne 42. En complément, la seconde couronne 42 comprend des échancrures 63 entre les orifices 62 de manière à dégager l'accès au dessus des orifices 60 de la première couronne pour faciliter l'assemblage des entretoises à l'aide de boulons 61.

Avantageusement, le décalage angulaire entre les orifices 60 et 62 correspond au décalage angulaire X entre les lames 22 pour obtenir une forme d'hélice au niveau des pointes des dents.

Selon un point important de l'invention, chaque entretoise 36 n'est pas entrainée par l'arbre 16. Seule l'entretoise disposée à une des extrémités de l'empilement des entretoises (notamment celle disposée en partie inférieure) est entrainée en rotation par l'arbre 16 par tout moyen approprié, notamment par encastrement (boulons).

Pour assurer l'entrainement en rotation des entretoises, des moyens d'accouplement assurent la liaison cinématique entre deux entretoises superposées. Selon un mode de réalisation, les moyens de liaison peuvent assurer cette liaison cinématique.

Pour limiter l'usure, les moyens de liaison cinématique comprennent au moins un pion 64 intercalé entre les entretoises, une partie du pion se logeant dans un orifice ménagé au niveau de la première couronne et l'autre partie se logeant dans un orifice ménagé au niveau de la seconde couronne.

De préférence, le pion 64 se présente sous la forme d'un cylindre creux dont le diamètre intérieur permet le passage d'une tige filetée d'un boulon 61 assurant la liaison entre deux entretoises. En complément, l'un des orifices 60 de la première couronne 40 a un diamètre adapté au diamètre extérieur du pion 64 et la partie supérieure d'un orifice 62 de la seconde couronne 42 a un diamètre adapté au diamètre extérieur du pion 64. L'orifice 62 comprend un épaulement pour limiter la translation du pion 64.

Pour protéger les entretoises, un conduit cylindrique creux 66, notamment en matière plastique, est placé entre chaque lame, le diamètre intérieur étant adapté pour loger l'entretoise 36 et sa hauteur étant ajustée à l'écartement entre les lames.

Avantageusement, le conduit 66 peut se déformer de manière à ce que sa hauteur (initialement légèrement supérieure à l'écartement entre les lames) s'adapte à l'écartement entre deux lames afin de supprimer tout jeu entre le conduit 66 et les lames 22.

Avantageusement, le conduit 66 est réalisé en un matériau permettant à au moins une de ses extrémités de s'évaser. De préférence, au moins une extrémité du conduit 66 comprend une forme en biseau favorisant l'évasement de ladite extrémité.

Au niveau de la seconde tête portant les contre-lames 24, 24', les entretoises 38 ont des formes sensiblement identiques à celles des entretoises 36. Ainsi, les parties similaires ou identiques sont référencées de la même manière. L'entretoise 38 destinée aux contre-lames 24, 24' se différencie de l'entretoise 36 destinée aux lames 22 au niveau de la portée 50.

En effet, la portée 50 de l'entretoise 38 a une hauteur supérieure à celle de l'entretoise 36 de manière à recevoir les deux contre-lames 24, 24' d'un même couple, les contre-lames 24, 24' étant maintenues espacées grâce à une entretoise 68.

Selon un mode de réalisation, l'entretoise 68 est un conduit cylindrique creux, notamment en matière plastique.

Avantageusement, pour protéger les entretoises 38, un conduit cylindrique creux 70, notamment en matière plastique, est placé entre chaque couple de contre-lames, le diamètre intérieur étant adapté pour loger l'entretoise 38 et sa hauteur étant ajustée à l'écartement entre les couples de contre-lames.

De préférence, comme les conduits 66, les conduits 68 et 70 peuvent se déformer de manière à s'adapter à l'écartement entre les contre-lames.

De préférence, les conduits creux 66 et 70 ont des diamètres identiques.

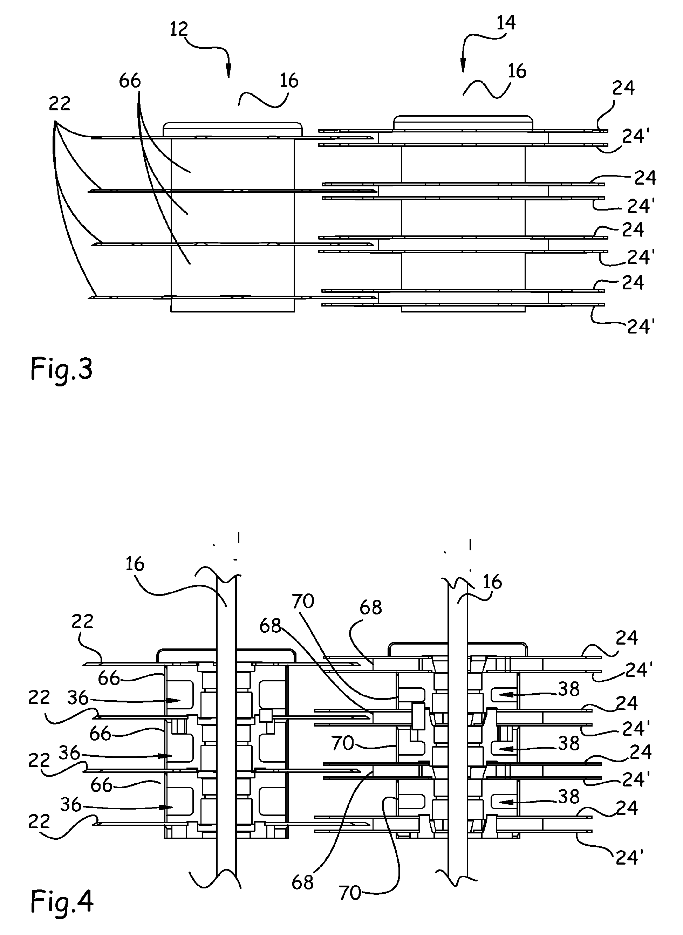

Les conduits 68 ont un diamètre supérieur de manière à ce que lorsque les têtes sont rapprochées, il subsiste un faible espace entre le conduit 68 et la lame comme illustré sur les figures 3 et 4. Cet agencement permet de limiter l'encrassement du conduit 68.

Selon un mode de réalisation les entretoises 36 et 38 sont obtenues par moulage et/ou usinage ce qui contribue à optimiser les coûts de fabrication tout en permettant de limiter l'espacement entre une lame et les contre-lames d'un même ensemble de coupe.

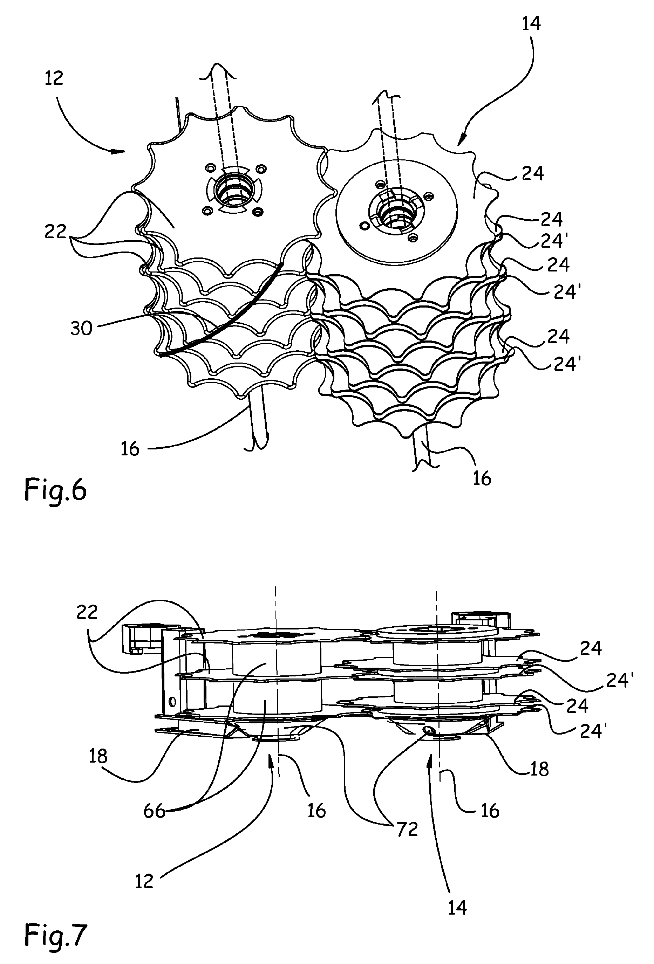

Pour limiter l'accrochage des fils de palissage, chaque tête comprend en partie inférieure un élément tronconique 72, comme illustré sur la figure 7.

Ainsi, cet élément tronconique 72 est relié au bras supportant la tête et comprend un pallier assurant le guidage de l'arbre 16.

Cet élément tronconique 72 comprend une grande base circulaire orientée vers le haut et une petite base circulaire orientée vers le bas et une hauteur entre les bases réduites.

Cet élément tronconique assure également la transmission du mouvement de rotation entre l'arbre 16 et l'entretoise 36 ou 38 située en partie inférieure de l'empilage.

## Revendications

1. Prétailleuse comprenant deux têtes (12, 14) susceptibles d'être disposées de part et d'autre d'un rang d'une culture, une première tête (12) comportant au moins un disque (22) avec en périphérie au moins une portion affutée appelé lame, **caractérisée en ce qu'**elle comprend au niveau de la seconde tête au moins un couple de deux disques (24, 24') avec des chants non affûtés, appelés contre-lames, une lame (22) d'une première tête (12) étant disposée dans un plan parallèle et intercalé entre les deux plans définis par les contre-lames (24, 24') d'un même couple portées par la seconde tête (14), ladite lame (22) et lesdites contre-lames (24, 24') formant un ensemble de coupe.

2. Prétailleuse selon la revendication 1, **caractérisée en ce que** l'écartement entre la lame (22) et une contre-lame (24, 24') varie de 3 à 10 mm.

3. Prétailleuse selon la revendication 1 ou 2, **caractérisée en ce que** les lames (22) et les contre-lames (24, 24') ont un pourtour avec une succession d'échancrures (26) et de dents (28) et sont disposées avec un décalage angulaire régulier les unes par rapport aux autres de manière à ce que les pointes des dents (28) des lames (22) et/ou des contre-lames (24, 24') superposées décrivent une hélice (30).

4. Prétailleuse selon la revendication 3, **caractérisée en ce que** l'angle du décalage angulaire est constant et compris dans la plage de 25 à 35°.

5. Prétailleuse selon l'une quelconque des revendications précédentes, **caractérisée en ce que**, pour chaque ensemble de coupe, la lame (22) est disposée à équidistance des contre-lames (24, 24').

6. Prétailleuse selon la revendication 5, **caractérisée en ce qu'**une première tête (12) comprend uniquement des lames (22) avec chacune un orifice central de manière à être enfilées sur un arbre (16) et espacées par des entretoises (36).

7. Prétailleuse selon la revendication 5 ou 6, **caractérisée en ce qu'**une tête (14) comprend uniquement des couples de contre-lames (24, 24') comportant un orifice central de manière à être enfilées sur un arbre (16), chaque couple de contre-lames (24, 24') étant espacé par des entretoises (38).

8. Prétailleuse selon la revendication 6 ou 7, **caractérisée en ce que** chaque entretoise (36, 38) comprend une première couronne (40) offrant au niveau d'une de ses faces une surface d'appui (46) contre laquelle peut être plaquée une première face d'une lame (22), une seconde couronne (42) offrant au niveau d'une de ses faces une surface d'appui (48) contre laquelle peut être plaquée une seconde face d'une lame (22), l'une des surfaces d'appui (46, 48) comprenant au moins une portée (50) à savoir au moins une portion cylindrique (52) venant en saillie par rapport à ladite surface d'appui (46, 48) avec un diamètre identique à celui de l'orifice central des lames ou des contre-lames.

9. Prétailleuse selon la revendication 8, **caractérisée en ce qu'**une première couronne (40) comprend au niveau de sa surface d'appui (46) une gorge (54) circulaire, le diamètre intérieur et/ou le diamètre extérieur de ladite gorge étant adapté au jeu près au diamètre correspondant des portions cylindriques (52) de la portée (50) prévue au niveau de la seconde couronne (42), la hauteur de ladite portée (50) étant adaptée de manière à ce qu'une partie de la portée (50) d'une première entretoise se loge dans la gorge (54) circulaire d'une autre entretoise.

10. Prétailleuse selon la revendication 8 ou 9, **caractérisée en ce que** la première couronne (40) comprend des orifices traversant (60) dont le diamètre permet le passage d'une tige filetée d'un boulon (61) assurant la fonction de moyens de liaison, **en ce que** la seconde couronne (42) comprend des orifices traversant (62) dont le diamètre permet le passage d'une tige filetée d'un boulon (61) et **en ce que** les orifices (60) de la première couronne (40) sont décalés angulairement par rapport aux orifices (62) de la seconde couronne (42) qui comprend des échancrures (63) entre les orifices (62) de manière à dégager l'accès au dessus des orifices (60) de la première couronne.

11. Prétailleuse selon l'une quelconque des revendications 8 à 10, **caractérisée en ce que** pour relier cinématiquement deux entretoises, au moins un pion (64) est intercalé entre les entretoises , une partie du pion (64) se logeant dans un orifice ménagé au niveau de la première couronne d'une première entretoise et l'autre partie se logeant dans un orifice ménagé au niveau de la seconde couronne d'une autre entretoise.

12. Prétailleuse selon la revendication 11, **caractérisée en ce que** le pion (64) se présente sous la forme d'un cylindre creux, l'un des orifices (60) de la première couronne 40 ayant un diamètre adapté au diamètre extérieur du pion (64) et la partie supérieure d'un orifice (62) de la seconde couronne (62) ayant un diamètre adapté au diamètre extérieur du pion (64).

13. Prétailleuse selon l'une quelconque des revendications 8 à 12, **caractérisé en ce qu'**une entretoise (38) prévue entre deux couples de contre-lames (24, 24') comprend une portée (50) dont la hauteur est adaptée pour permettre la superposition de deux contre-lames (24, 24') espacées par un conduit creux (68).
